# EUROPÄISCHE PATENTANMELDUNG

(11) **EP 4 714 848 A1**
(43) Veröffentlichungstag der Anmeldung: **25.03.2026**
(21) Anmeldenummer: 25197858.1
(22) Anmeldetag: 25.08.2025
(51) Int. Cl.: B65D 19/02, G06Q 10/08, G06Q 10/0833, H04W 4/029

(54) **TRANSPORTBOX ZUM TRANSPORT INSBESONDERE VON LEBENSMITTELN, LEBENSMITTELROHSTOFFEN UND FLEISCHNEBENPRODUKTEN, SYSTEM ZUR ORTUNG EINER SOLCHEN TRANSPORTBOX, ORTUNGSNETZWERK, VERFAHREN ZUR POSITIONSBESTIMMUNG EINER TRANSPORTBOX UND VERFAHREN ZUM BETRIEB EINES ORTUNGSNETZWERKS**

(30) Priorität: 18.09.2024 DE 102024003006
(71) Anmelder: Decker, Ludwig, 9761 VB Eelde (NL)
(72) Erfinder: Decker, Ludwig, 9761 VB Eelde (NL)
(74) Vertreter: Kluin Patent

(57) **Zusammenfassung**

Es wird eine Transportbox (1) zum Transport insbesondere von Lebensmitteln, Lebensmittelrohstoffen und Fleischnebenprodukten vorgeschlagen, welche einen drahtlos lokalisierbaren Chip (2) aufweist. Ferner werden ein System (100) zur Ortung einer Transportbox (1), ein Ortungsnetzwerk (200), ein Verfahren zur Positionsbestimmung einer Transportbox (1) sowie ein Verfahren zum Betrieb eines Ortungsnetzwerks (200) vorgeschlagen.

## Beschreibung

Die vorliegende Erfindung betrifft eine Transportbox zum Transport von Lebensmitteln, Lebensmittelrohstoffen und Fleischnebenprodukten, ein System zur Ortung einer Transportbox, ein Ortungsnetzwerk aufweisend eine Transportbox, ein Verfahren zur Positionsbestimmung einer Transportbox sowie ein Verfahren zum Betrieb eines Ortungsnetzwerks.

Die moderne Lebensmittelproduktion ist örtlich zergliedert. Dies ist insbesondere dadurch begründet, dass die einzelnen Schritte auf dem Weg vom Rohprodukt zum Lebensmittel an hochspezialisierten Standorten durchgeführt werden. Durch die Spezialisierung ist ein hohes Maß an Lebensmittelsicherheit und Wirtschaftlichkeit möglich.

Neben den positiven Effekten der Zergliederung bedingt diese allerdings auch, dass die Lebensmittelproduktion mit einer aufwendigen Logistik verbunden ist. Am Beispiel der Produktion eines fleischhaltigen Lebensmittels sind hier der Weg des Tiers zum Schlachthof, der Weg des Fleisches zu den weiterverarbeitenden Betrieben oder der Weg der Fleischnebenprodukte zu Betrieben, die aus den Fleischnebenprodukten Lebensmittelrohstoffe (rück-)gewinnen, und der Weg der Lebensmittelrohstoffe zu den weiterverarbeitenden Betrieben erwähnt.

Die Lebensmittel, Lebensmittelrohstoffe bzw. Fleischnebenprodukte werden hierbei in Transportboxen transportiert. Solche Transportboxen müssen eine Vielzahl von Eigenschaften erfüllen. Sie müssen bei Plus- wie bei Minusgraden robust sein und beispielsweise Stößen und anderen mechanischen Beanspruchungen beim Transport, beim Verladen und Entladen sowie beim Beladenwerden und Entladenwerden standhalten. Es muss möglich sein, die Transportboxen vor dem Hintergrund der notwendigen Lebensmittelhygiene ausreichend gut zu reinigen. Schließlich müssen die Transportboxen leicht sein, damit die Logistik so effizient wie möglich durchgeführt werden kann.

In der Lebensmittelbranche hat sich ein System etabliert, bei dem ein Anbieter Transportboxen vermietet. Die Abrechnung hierzu wird anhand der Verweilzeiten bei den einzelnen Marktteilnehmern durchgeführt und geschieht größtenteils basierend auf händisch erhobenen Daten zum Eingang und Ausgang der Transportboxen beim jeweiligen Marktteilnehmer. Dies ist aufwendig und fehleranfällig.

Es ist daher eine Aufgabe der vorliegenden Erfindung, eine Transportbox zum Transport von Lebensmitteln, Lebensmittelrohstoffen und Fleischnebenprodukten, ein System zur Ortung einer solchen Transportbox, ein Ortungsnetzwerk aufweisend eine Transportbox, ein Verfahren zur Positionsbestimmung einer Transportbox sowie ein Verfahren zum Betrieb eines Ortungsnetzwerks bereitzustellen, welche die genannten Nachteile des Standes der Technik nicht aufweisen, sondern eine sichere und einfache Erhebung der Verweilzeiten bei den einzelnen Marktteilnehmern ermöglichen.

Diese Aufgabe wird gelöst durch eine Transportbox zum Transport von Lebensmitteln, Lebensmittelrohstoffen und Fleischnebenprodukten nach Anspruch 1. Ferner wird diese Aufgabe gelöst durch ein System zur Ortung einer Transportbox nach Anspruch 8, durch ein Ortungsnetzwerk nach Anspruch 11, durch ein Verfahren zur Positionsbestimmung einer Transportbox nach Anspruch 12 sowie durch ein Verfahren zum Betrieb eines Ortungsnetzwerks nach Anspruch 14.

Die erfindungsgemäße Transportbox ist insbesondere eine Transportbox zum Transport von Lebensmitteln, Lebensmittelrohstoffe und Fleischprodukten. Vorzugsweise ist die Transportbox aus einem Kunststoff gegossen. Insbesondere ist vorgesehen, dass die Transportbox einstückig ist. Hierdurch ist es auf vorteilhafte Weise möglich, den Aufwand zur Produktion der Transportbox gering zu halten und mechanische Beschädigungen weitestgehend zu vermeiden. Denkbar ist, dass die Transportbox aus einem Kunststoff gegossen ist, welcher Metallpartikel enthält. Hierdurch ist eine Detektion von Bruchstücken der Transportbox mit Röntgenstrahlen oder Metalldetektoren möglich.

Erfindungsgemäß ist vorgesehen, dass die Transportbox einen drahtlos lokalisierbaren Chip aufweist. Der drahtlos lokalisierbare Chip kann beispielsweise von einem Endgerät registriert werden. Anhand des Standorts des Endgerätes kann der Standort der Transportbox bis auf wenige Meter genau bestimmt werden. Hierdurch ist eine Zuordnung der Transportbox zu einem bestimmten Betrieb eines Marktteilnehmers möglich. Kommt die Transportbox bei einem Marktteilnehmer an, so wird dies registriert. Ebenfalls wird registriert, wenn die Transportbox den Marktteilnehmer verlässt. Hierdurch kann automatisiert die Verweildauer der Transportbox bei dem jeweiligen Marktteilnehmer erfasst werden. Dadurch, dass die Transportbox mit dem drahtlos lokalisierbaren Chip registriert wird, entfällt beispielsweise das anfällige Anbringen von Barcodes an der Transportbox. Die Transportbox ist in jeder räumlichen Lage und unabhängig von den optischen Gegebenheiten registrierbar. Denkbar ist beispielsweise, dass der drahtlos lokalisierbare Chip von einem Endgerät der Mitarbeiter eines Marktteilnehmers, einem beim Marktteilnehmer fest installierten Endgerät und/oder von einem Endgerät der Mitarbeiter eines Logistikunternehmers registriert wird.

Vorteilhafte Ausgestaltungen und Weiterbildungen der Erfindung sind den Unteransprüchen, sowie der Beschreibung unter Bezugnahme auf die Zeichnungen entnehmbar.

Gemäß einer bevorzugten Ausführungsform der vorliegenden Erfindung ist vorgesehen, dass die Transportbox eine Palettenbox ist. Hierdurch ist es auf vorteilhafte Weise möglich, dass die Transportbox einfach mit einem Flurförderzeug transportiert und eingelagert wird. Denkbar ist, dass die Transportbox stapelbar ist.

Gemäß einer weiteren bevorzugten Ausführungsform der vorliegenden Erfindung ist vorgesehen, dass der Chip eine Funk-Kommunikationseinheit zum Kommunizieren mit einem Endgerät aufweist. Die Funk-Kommunikationseinheit ist vorzugsweise zum Kommunizieren via Bluetooth vorgesehen. Denkbar ist aber auch, dass die Funk-Kommunikationseinheit zum Kommunizieren via Bluetooth und/oder WLAN und/oder NFC vorgesehen ist. Hierdurch wird auf vorteilhafte Weise bewirkt, dass die Transportbox nicht ihre eigene Position ermitteln muss, sondern dass lediglich die Transportbox von dem Endgerät registriert wird. Wird die Transportbox von dem Endgerät registriert, so kann darauf geschlossen werden, dass sich die Transportbox in der Nähe des Endgerätes befindet. Die Transportbox wird somit am Standort des Endgerätes lokalisiert. Ein Endgerät ist ein Gerät, welches an einen Netzabschluss eines Daten- oder Telekommunikationsnetzes angeschlossen ist. Das Endgerät kann beispielsweise ein Mobiltelefon sein. Möglich ist aber auch, dass das Endgerät ein Tabletcomputer oder ein Computer ist. Das Endgerät kann fest installiert sein. Wird die Transportbox von dem fest installierten Endgerät registriert, so kann die Transportbox durch den bekannten Standort des festinstallierten Endgerätes lokalisiert werden. Denkbar ist aber auch, dass das Endgerät nicht fest installiert ist. In diesem Fall kann das Endgerät, wenn es die Transportbox registriert, seine eigene Position, beispielsweise mittels eines GPS-Empfängers des Endgerätes, ermitteln und somit die Transportbox lokalisieren. Hierdurch ist es auf vorteilhafte Weise möglich, mit sehr geringem Aufwand ein großes Ortungsnetzwerk zum Lokalisieren von Transportboxen aufzubauen.

Vorzugsweise ist vorgesehen, dass der Chip einen Temperatursensor aufweist und die Funk-Kommunikationseinheit dazu vorgesehen ist, die vom Temperatursensor ermittelte Temperatur an das Endgerät zu übertragen. Hierdurch kann auf vorteilhafte Weise die Einhaltung der Kühlkette kontrolliert werden.

Besonders bevorzugt ist eine Ausführungsform der vorliegenden Erfindung, bei der vorgesehen ist, dass der Chip in die Transportbox eingegossen ist. Hierdurch ist auf vorteilhafte Weise sichergestellt, dass der Chip vor Nässe und mechanischen Beschädigungen geschützt ist. Insbesondere kann so sichergestellt sein, dass der Chip mechanisch fixiert ist und beim Bewegen der Transportbox nicht anschlägt. Denkbar ist, dass der Chip in eine Seitenwand der Transportbox oder in einer Ecke der Transportbox eingegossen ist.

Gemäß einer weiteren bevorzugten Ausführungsform der vorliegenden Erfindung ist vorgesehen, dass die Transportbox einen Batteriespeicher zur Stromversorgung des Chips aufweist. Hierdurch ist ein autarker Betrieb des Chips möglich, ohne dass dieser extern bestromt werden müsste. Denkbar ist, dass der Batteriespeicher eine Kapazität von wenigstens 1.000 mAh aufweist. Hierdurch ist eine lange Laufzeit des Chips auch in Kühlräumen sichergestellt. Denkbar ist ferner, dass der Batteriespeicher räumlich getrennt von dem Chip vorgesehen ist. Insbesondere ist denkbar, dass der Batteriespeicher getrennt vom Chip in der Transportbox vergossen ist. Alternativ hierzu kann aber auch vorgesehen sein, dass der Batteriespeicher getrennt vom Chip in der Transportbox angeordnet, nicht aber in der Transportbox vergossen ist. Hierdurch wird auf vorteilhafte Weise ermöglicht, den Batteriespeicher unabhängig vom Chip zu tauschen. Vorzugsweise ist ferner vorgesehen, dass von der Funk-Kommunikationseinheit ein Ladezustand des Batteriespeichers und besonders bevorzugt ein Alterungszustand des Batteriespeichers an das Endgerät übertragen wird.

Gemäß einer weiteren bevorzugten Ausführungsform der vorliegenden Erfindung ist vorgesehen, dass der Batteriespeicher zerstörungsfrei von außen aufladbar ist. Dies ermöglicht es, die Lebensdauer des Batteriespeichers zu erhöhen. Denkbar ist, dass der Batteriespeicher aufgeladen wird, wenn die Transportbox im Rahmen ihres alltäglichen Gebrauches beim Anbieter der Transportbox angeliefert ist. Vorzugsweise ist vorgesehen, dass die Transportbox nach außen führende Kontakte zum Laden oder einen Empfänger zum induktiven Laden aufweist. Hierdurch ist es auf vorteilhafte Weise möglich, den Batteriespeicher so in der Transportbox anzuordnen, dass dieser nur schlecht oder nicht zerstörungsfrei zugänglich, dafür aber sehr sicher gelagert ist und dennoch den Batteriespeicher von außen aufzuladen. Insgesamt wird hierdurch die Ausfallsicherheit der Transportbox erhöht und die Lebensdauer verlängert.

Alternativ oder zusätzlich ist denkbar, dass der Batteriespeicher aus der Transportbox zerstörungsfrei entnehmbar ist. Denkbar ist beispielsweise, dass der Batteriespeicher hinter einer Klappe oder einem Schraubverschluss im Inneren der Transportbox angeordnet ist. Hierdurch kann auf einfache Art und Weise der Batteriespeicher getauscht werden, wenn dieser entladen ist oder das Ende seiner Lebensdauer erreicht hat.

Ein weiterer Gegenstand der vorliegenden Erfindung zur Lösung der eingangs formulierten Aufgabe ist ein System zur Ortung einer Transportbox. Das System weist hierzu eine erfindungsgemäße Transportbox und ein Endgerät auf. Das Endgerät ist zum Kommunizieren mit der Funk-Kommunikationseinheit des Chips konfiguriert. Ferner ist das Endgerät zur Kommunikation mit einer Recheneinheit über ein Netzwerk konfiguriert. Hierdurch ist es auf vorteilhafte Weise möglich, dass der technische Aufwand zum Orten der Transportbox in der Transportbox selbst minimiert wird. Der Chip der Transportbox wird durch die Kommunikation der Funk-Kommunikationseinheit mit dem Endgerät von dem Endgerät registriert. Das Endgerät kennt den eigenen Standort, beispielsweise durch eine Benutzereingabe am Endgerät, oder kann den eigenen Standort feststellen. Dies kann beispielsweise mit einem GPS-Empfänger des Endgerätes geschehen. Hat das Endgerät die Transportbox registriert und kennt es den eigenen Standort, so wird der Standort der Transportbox über das Netzwerk an die Recheneinheit weitergegeben. Das Netzwerk kann beispielsweise ein Mobilfunknetz, ein Datennetz, ein Telefonnetz und/oder das Internet umfassen. Im Chip der Transportbox ist vorzugsweise eine Identifikationsnummer der Transportbox hinterlegt. Die Identifikationsnummer ist einer bestimmten Transportbox zugeordnet. So kann die Transportbox genau identifiziert werden.

Gemäß einer weiteren bevorzugten Ausführungsform der vorliegenden Erfindung ist vorgesehen, dass das Endgerät ein mobiles Endgerät ist. Das Endgerät kann beispielsweise ein Mobiltelefon sein. Denkbar ist, dass als Endgeräte die Mobiltelefone der Mitarbeiter eines Unternehmens, in dessen Einflussbereich die Transportbox angeordnet ist, genutzt werden. Denkbar ist auch, dass als Endgerät ein Mobiltelefon eines Fahrers eines Transportunternehmens genutzt wird, welcher die Transportbox gerade transportiert. Denkbar ist aber auch, dass das Endgerät ein mobiles Endgerät ist, welches fest an einem Ort installiert ist. Denkbar ist beispielsweise, dass ein oder mehrere Endgeräte, beispielsweise in einer Lagerhalle, fest installiert sind. Hierdurch ist es möglich, nicht auf Mobiltelefone der Mitarbeiter angewiesen zu sein.

Ein weiterer Gegenstand zur Lösung der eingangs gestellten Aufgabe ist ein Ortungsnetznetzwerk aufweisend ein erfindungsgemäßes System. Das Ortungsnetznetzwerk weist ein weiteres Endgerät und die Recheneinheit auf. Der Chip ist zum Kommunizieren mit dem Endgerät und dem weiteren Endgerät konfiguriert. Das weitere Endgerät ist zur Kommunikation mit der Recheneinheit über das Netzwerk und/oder ein weiteres Netzwerk konfiguriert ist. Hierdurch ist es auf vorteilhafte Weise möglich, die Transportbox zu orten und den Weg der Transportbox an zentraler Stelle, nämlich mit der Recheneinheit, nachzuvollziehen und zu verwalten. Das Endgerät und das weitere Endgerät sind voneinander räumlich beabstandet angeordnet. Denkbar ist beispielsweise, dass das Endgerät bei einem ersten Marktteilnehmer und das weitere Endgerät bei einem zweiten Marktteilnehmer angeordnet ist. Befindet sich die Transportbox beim ersten Marktteilnehmer, so wird diese von dem Endgerät registriert. Das Endgerät übermittelt den Standort der Transportbox über das Netzwerk an die Recheneinheit. Verlässt die Transportbox den ersten Marktteilnehmer, so wird die Transportbox nicht mehr von dem Endgerät registriert, was ebenfalls von dem Endgerät an die Recheneinheit übermittelt wird. So ist die Recheneinheit in der Lage festzustellen, über welchen Zeitraum sich die Transportbox beim ersten Marktteilnehmer befunden hat. Wird die Transportbox zum zweiten Marktteilnehmer transportiert, registriert das weitere Endgerät den Zugang der Transportbox beim zweiten Marktteilnehmer und teilt dies der Recheneinheit mit. Die zentrale Recheneinheit sorgt somit dafür, dass auf einfache Art und Weise stets eine Übersicht über den aktuellen Standort Transportboxen vorhanden ist.

Ein weiterer Gegenstand zur Lösung der eingangs gestellten Aufgabe ist ein Verfahren zur Positionsbestimmung einer erfindungsgemäßen Transportbox. Die Position der Transportbox wird hierbei anhand des Chips bestimmt. Vorzugsweise ist hierzu vorgesehen, dass der Chip von dem Endgerät registriert wird, wobei die Position der Transportbox anhand der Position des Endgerätes bestimmt wird.

Ein weiterer Gegenstand zur Lösung der eingangs gestellten Aufgabe ist ein Verfahren zum Betrieb eines erfindungsgemäßen Ortungsnetzwerks. Der Chip wird von dem Endgerät oder von dem weiteren Endgerät registriert. Bei der Registrierung des Chips durch das Endgerät wird von dem Endgerät eine Information hierüber über das Netzwerk an die Recheneinheit übermittelt. Bei Registrierung des Chips durch das weitere Endgerät wird eine Information hierüber über das Netzwerk und/oder ein weiteres Netzwerk an die Recheneinheit übermittelt wird. Die Position der Transportbox wird anhand der Position des übermittelnden Endgerätes bestimmt.

Alle zuvor im Zusammenhang mit der erfindungsgemäßen Transportbox offenbarten Einzelheiten, Merkmale und Vorteile beziehen sich gleichfalls auf das erfindungsgemäße System, das erfindungsgemäße Ortungsnetzwerk, das erfindungsgemäße Verfahren zur Positionsbestimmung sowie auf das erfindungsgemäße Verfahren zum Betrieb des Ortungsnetzwerks et vice versa.

Weitere Einzelheiten, Merkmale und Vorteile der Erfindung ergeben sich aus den Zeichnungen sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den Erfindungsgedanken nicht einschränken.

**Figur 1** illustriert schematisch ein System gemäß einer beispielhaften Ausführungsform der vorliegenden Erfindung mit einer Transportbox gemäß einer beispielhaften Ausführungsform der vorliegenden Erfindung.

**Figur 2** illustriert schematisch ein Ortungsnetzwerk gemäß einer beispielhaften Ausführungsform der vorliegenden Erfindung.

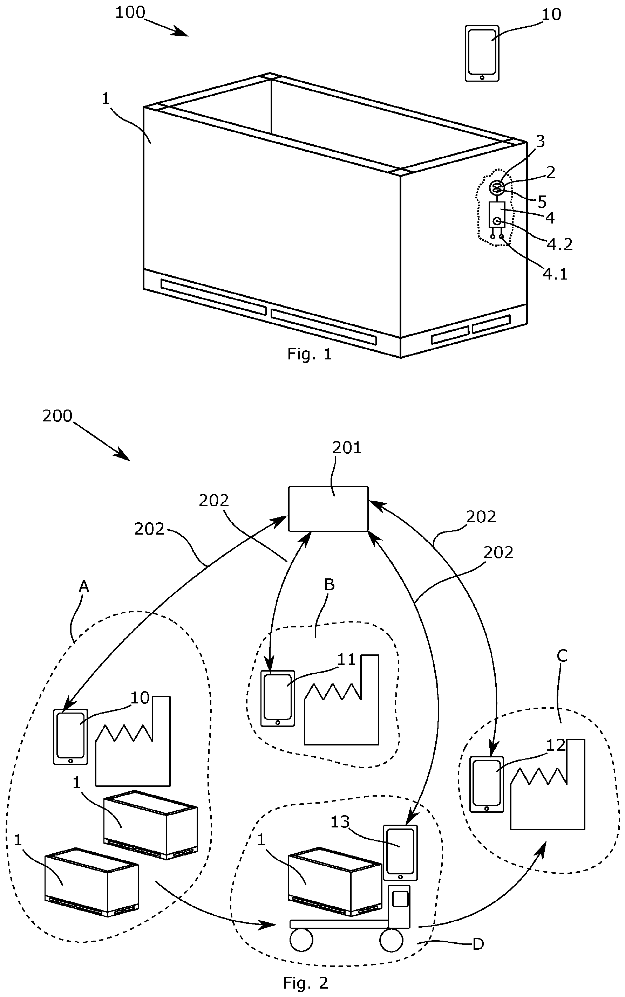

Figur 1 illustriert schematisch ein System 100 gemäß einer beispielhaften Ausführungsform der vorliegenden Erfindung mit einer Transportbox 1 gemäß einer beispielhaften Ausführungsform der vorliegenden Erfindung. Die Transportbox 1 ist zum Transport von Lebensmitteln, Lebensmittelrohstoffen und Fleischnebenprodukten vorgesehen. Dieser Verwendungszweck der Transportbox 1 stellt bestimmte Anforderungen an die Transportbox 1. So muss die Transportbox 1 beispielsweise sicher und einfach so gründlich zu reinigen sein, dass dies den Anforderungen an die Lebensmittelhygiene entspricht. Ferner muss die

Transportbox 1 robust und dennoch möglichst leicht sein. Hierzu ist vorgesehen, dass die Transportbox 1 aus einem Kunststoff gegossen ist. In der hier dargestellten Ausführungsform ist die Transportbox 1 als Palettenbox vorgesehen, sodass die Transportbox 1 beispielsweise von einem Gabelstapler aufgenommen und transportiert werden kann. Ferner können mehrere Transportboxen 1 sicher übereinandergestapelt werden.

In die Transportbox 1 ist ein drahtlos lokalisierbarer Chip 2 eingegossen. In dem Chip 2 ist eine Identifikationsnummer der Transportbox 1 hinterlegt. Der Chip 2 weist eine Funk-Kommunikationseinheit 3 auf, welche in der hier dargestellten Ausführungsform zum Kommunizieren mit einem Endgerät 10 via Bluetooth vorgesehen ist. Ferner weist der Chip 2 einen Temperatursensor 5 auf.

Zur Stromversorgung des Chips 2 ist ein Batteriespeicher 4 in die Transportbox 1 eingegossen. Denkbar, hier allerdings nicht dargestellt, ist, dass der Batteriespeicher 4 nicht eingegossen ist, sondern beispielsweise hinter einer Klappe oder einem Schraubverschluss in der Transportbox 1 angeordnet ist. Zum Laden des Batteriespeichers 4 weist dieser nach außen führende Kontakte 4.1 oder einen Empfänger 4.2 zum induktiven Laden auf. Zum besseren Verständnis sind hier sowohl die nach außen führenden Kontakte 4.1 als auch der Empfänger 4.2 zum induktiven Laden gezeichnet. Tatsächlich reicht zum alltäglichen Betrieb der Transportbox 1 eine der Alternativen aus.

Das hier dargestellte System 100 weist neben der Transportbox 1 ein Endgerät 10 auf. Das Endgerät 10 ist hier als Mobiltelefon dargestellt. Das Endgerät 10 kann aber auch ein Tabletcomputer, ein Laptop oder ein fest installierter Rechner sein.

Figur 2 zeigt ein Ortungsnetzwerk 200. Das dargestellte Ortungsnetzwerk 200 weist mehrere Transportboxen 1 auf, wie sie in Figur 1 dargestellt sind. Die Transportboxen 1 werden von unterschiedlichen Marktteilnehmern A, B, C verwendet und von einem Logistikunternehmer D zwischen den Marktteilnehmern A, B, C verteilt.

Beim ersten Marktteilnehmer A lagern in der dargestellten Situation zwei Transportboxen 1. Die Transportboxen 1 beim ersten Marktteilnehmer A Kommunizieren mit dem Endgerät 10 des ersten Marktteilnehmers A, wodurch die beiden Transportboxen 1 anhand ihrer jeweiligen Identifikationsnummer und einer Standortbestimmung durch das Endgerät 1 als bei den ersten Marktteilnehmer A lagernd registriert werden. Diese Information wird über ein Netzwerk 202 von dem Endgerät 10 an eine zentrale Recheneinheit 201 übermittelt. Neben den Informationen über den Standort der Transportboxen 1 werden auch Informationen zum Ladezustand der Batteriespeicher 4 der Transportboxen 1 sowie der Temperatur, welche von den Temperatursensoren 5 der Transportboxen 1 gemessen wird, an die zentrale Recheneinheit 201 übermittelt.

Eine weitere Transportbox 1 befindet sich in der dargestellten Situation auf einem Lkw des Logistikunternehmers D auf dem Weg von dem ersten Marktteilnehmer A hin zum dritten Marktteilnehmer C. Beim Verlassen des Werksgeländes des ersten Marktteilnehmers A endet die Ortung der nun transportierten Transportbox 1 durch das Endgerät 10 des ersten Marktteilnehmers A. Somit endet auch die Übertragung der Information über die Lagerung dieser Transportbox 1 bei dem ersten Marktteilnehmer A an die Recheneinheit 201. Stattdessen registriert nun ein drittes weiteres Endgerät 13 des Logistikunternehmers D die transportierte Transportbox 1 und sendet Information hierüber zusammen mit Ortsinformationen, Informationen bezüglich der Temperatur aus dem Temperatursensor 5 der Transportbox 1 und Informationen zum Ladezustand des Batteriespeichers 4 der Transportbox 1 an die Recheneinheit 201.

Ist die Transportbox 1 beim dritten Marktteilnehmer C angekommen, so wird diese von dem zweiten weiteren Endgerät 12 des dritten Marktteilnehmer C registriert entsprechende Informationen über das Netzwerk 202 an die Recheneinheit 201 gesendet.

Derzeit lagern beim zweiten Marktteilnehmer B keine Transportboxen 1, weswegen keine Informationen von den weiteren Endgerät 11 des zweiten Marktteilnehmer B an die Recheneinheit 201 übertragen werden.

Die Recheneinheit 201 ist somit in der Lage, die Wege der Transportboxen 1 und die Verweildauer der Transportboxen 1 bei den jeweiligen Marktteilnehmern A, B, C nachzuvollziehen und zu verwalten. Anhand der übermittelten Temperaturen kann auch auf das Einhalten der Kühlkette geschlossen werden. Leitet eines der Endgeräte 10, 11, 12, 13 Informationen über einen niedrigen Ladezustand des Batteriespeichers 4, so kann dieser bei der nächsten Gelegenheit aufgeladen werden.

### Bezugszeichenliste

- 1: Transportbox
- 2: Chip
- 3: Funk-Kommunikationseinheit
- 4: Batteriespeicher
- 4.1: Kontakte
- 4.2: Empfänger
- 5: Temperatursensor
- 10: Endgerät
- 11: weiteres Endgerät
- 12: zweites weiteres Endgerät
- 13: drittes weiteres Endgerät
- 100: System
- 200: Ortungsnetzwerk
- 201: Recheneinheit
- 202: Netzwerk

- A: Erster Marktteilnehmer
- B: Zweiter Marktteilnehmer
- C: Dritter Marktteilnehmer
- D: Logistikunternehmer

## Patentansprüche

1. Transportbox (1) zum Transport, insbesondere zum Transport von Lebensmitteln, Lebensmittelrohstoffen und Fleischnebenprodukten, **dadurch gekennzeichnet, dass** die Transportbox einen drahtlos lokalisierbaren Chip (2) aufweist.

2. Transportbox (1) nach Anspruch 1, **dadurch gekennzeichnet, dass** die Transportbox (1) eine Palettenbox ist.

3. Transportbox (1) einem der vorhergehenden Ansprüche, **dadurch gekennzeichnet, dass** der Chip (2) eine Funk-Kommunikationseinheit (3) zum Kommunizieren mit einem Endgerät (10) aufweist, wobei die Funk-Kommunikationseinheit (3) vorzugsweise zum Kommunizieren via Bluetooth vorgesehen ist.

4. Transportbox (1) nach einem der vorhergehenden Ansprüche, **dadurch gekennzeichnet, dass** der Chip (2) in die Transportbox (1) eingegossen ist.

5. Transportbox (1) nach einem der vorhergehenden Ansprüche, **dadurch gekennzeichnet, dass** die Transportbox (1) einen Batteriespeicher (4) zur Stromversorgung des Chips (2) aufweist, wobei der Batteriespeicher vorzugsweise getrennt von Chip (2) in der Transportbox (1) vergossen ist.

6. Transportbox (1) nach Anspruch 5, **dadurch gekennzeichnet, dass** der Batteriespeicher (4) zerstörungsfrei von außen aufladbar ist, wobei die Transportbox (1) hierzu nach außen führende Kontakte (4.1) oder einen Empfänger (4.2) zum induktiven Laden aufweist.

7. Transportbox (1) nach einem der Ansprüche 5 bis 6, **dadurch gekennzeichnet, dass** der Batteriespeicher (4) aus der Transportbox (1) zerstörungsfrei entnehmbar ist.

8. System (100) zur Ortung einer Transportbox (1), wobei das System (100) eine Transportbox (1) nach einem der vorhergehenden Ansprüche und ein Endgerät (10) aufweist, wobei das Endgerät (10) zum Kommunizieren mit der Funk-Kommunikationseinheit (3) des Chips (2) konfiguriert ist, wobei das Endgerät (10) zur Kommunikation mit einer Recheneinheit (201) über ein Netzwerk (202) konfiguriert ist.

9. System (100) nach Anspruch 8, **dadurch gekennzeichnet, dass** das Endgerät (10) ein mobiles Endgerät (10) ist.

10. System (100) nach einem der Ansprüche 8 bis 9, **dadurch gekennzeichnet, dass** das Netzwerk (202) ein Mobilfunknetz und/oder das Internet umfasst.

11. Ortungsnetznetzwerk (200) aufweisend ein System (100) nach einem der Ansprüche 8 bis 10, wobei das Ortungsnetznetzwerk (200) ein weiteres Endgerät (11) und die Recheneinheit (201) aufweist, wobei der Chip (2) zum Kommunizieren mit dem Endgerät (10) und dem weiteren Endgerät (11) konfiguriert ist, wobei das weitere Endgerät (11) zur Kommunikation mit der Recheneinheit (201) über das Netzwerk (202) und/oder ein weiteres Netzwerk konfiguriert ist.

12. Verfahren zur Positionsbestimmung einer Transportbox (1) nach einem der Ansprüche 1 bis 7, wobei die Position der Transportbox (1) anhand des Chips (2) bestimmt wird.

13. Verfahren nach Anspruch 12, **dadurch gekennzeichnet, dass** der Chip (2) von dem Endgerät (10) registriert wird, wobei die Position der Transportbox (1) anhand der Position des Endgerätes (10) bestimmt wird.

14. Verfahren zum Betrieb eines Ortungsnetzwerks (200) nach Anspruch 11, **dadurch gekennzeichnet, dass** der Chip (2) von dem Endgerät (10) oder von dem weiteren Endgerät (11) registriert wird, wobei bei Registrierung des Chips (2) durch das Endgerät (10) von dem Endgerät (10) eine Information hierüber über das Netzwerk (202) an die Recheneinheit (201) übermittelt wird, wobei bei Registrierung des Chips (2) durch das weitere Endgerät (11) eine Information hierüber über das Netzwerk (202) und/oder das weitere Netzwerk an die Recheneinheit (201) übermittelt wird, wobei die Position der Transportbox (1) anhand der Position des übermittelnden Endgerätes (10, 11) bestimmt wird.
